(19) **Europäisches Patentamt / European Patent Office / Office européen des brevets**

(11) **EP 4 579 977 A1**

(12) # EUROPEAN PATENT APPLICATION

(43) Date of publication:
02.07.2025 Bulletin 2025/27

(21) Application number: 24222948.2

(22) Date of filing: 23.12.2024

(51) International Patent Classification (IPC):
H02J 3/14 (2006.01)     H02J 3/48 (2006.01)
H02J 3/38 (2006.01)     H02J 7/34 (2006.01)

(52) Cooperative Patent Classification (CPC):
H02J 3/144; H02J 3/381; H02J 3/48; H02J 7/34;
H02J 2300/30; H02J 2310/50

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 27.12.2023 US 202363614930 P
19.12.2024 JP 2024224262
19.12.2024 JP 2024224279
20.12.2024 US 202418989688
20.12.2024 US 202418989700

(71) Applicant: Yokogawa Electric Corporation
Musashino-shi
Tokyo 180-8750 (JP)

(72) Inventors:
• Taniguchi, Koichi
Tokyo, 180-8750 (JP)
• Okabe, Nobuo
Tokyo, 180-8750 (JP)

(74) Representative: Henkel & Partner mbB
Patentanwaltskanzlei, Rechtsanwaltskanzlei
Maximiliansplatz 21
80333 München (DE)

(54) **POWER SUPPLY MANAGEMENT SYSTEM**

(57) A system and method are disclosed. An illustrative method includes receiving information about a power demand for an output power of a first fuel cell and an output power of an additional energy source, generating control information that optimizes a ratio of the output power of the first fuel cell and the output power of the additional energy source to meet the power demand, and delivering a control output to the first fuel cell and the additional energy source according to the control information that optimizes the ratio of the output power of the first fuel cell and the output power of the additional energy source.

FIG. 1

EP 4 579 977 A1

## Description

CROSS-REFERENCE TO RELATED APPLICATIONS

The present application claims the benefit of and priority to Japanese Patent Application Nos. 2024-224262 and 2024-224279, both filed on December 19, 2024. The present application also claims the benefit of and priority U.S. Provisional Application No. 63/614,930, filed on December 27, 2023, entitled "ENERGY MANAGEMENT SYSTEM", all of which are hereby incorporated herein by reference in their entireties.

FIELD OF THE DISCLOSURE

The present disclosure generally relates to simulation systems and, more specifically, relates to systems and methods for managing one or more power supplies.

BACKGROUND

Control systems for in-house power generation facilities typically operate by switching between receiving cheap nighttime power from the commercial power grid and in-house power generation. The control to adjust the amount of electricity generated by in-house power generating in consideration of purchased electricity rates that change in real-time is not currently possible. There currently does not exist an energy management system to control the output of on-site power generation that utilizes green energy, and/or to control the output of power generation that utilizes a mixture of green energy and conventional energy sources, to minimize the unit cost of power generation while also taking into account carbon dioxide reduction obligations.

SUMMARY

The above-noted shortcomings are addressed by embodiments of the present disclosure. In particular, a power supply system and an orchestration system are disclosed.

In some aspects, a power supply system is provided that includes: a processor; and memory coupled with the processor, wherein the memory comprises data stored thereon that is executable by the processor, wherein the data includes first data that enables the processor to: receive information about a power demand for an output power of a first fuel cell and an output power of an additional energy source; generate control information that optimizes a ratio of the output power of the first fuel cell and the output power of the additional energy source to meet the power demand; and deliver a control output to the first fuel cell and the additional energy source according to the control information that optimizes the ratio of the output power of the first fuel cell and the output power of the additional energy source.

According to at least some aspects, the additional energy source comprises at least one of a storage battery, a second fuel cell, and a power generator.

According to at least some aspects, the first fuel cell comprises a first startup period, wherein the second fuel cell comprises a second startup period, and wherein the first startup period is different from the first startup period.

According to at least some aspects, the data further enables the processor to optimize the ratio of the output power of the first fuel cell and the output power of the additional energy source between a range of 20% and 80% of a load capacity of the first fuel cell.

According to at least some aspects, the data further enables the processor to optimize the ratio of the output power of the first fuel cell and the output power of the additional energy source so that the output power of the first fuel cell is within a range below a predetermined maximum operating frequency with respect to degradation, based on a frequency variation of a power demand time series.

According to at least some aspects, the data further enables the processor to predict the power demand based on the information received about the power demand.

According to at least some aspects, the data further enables the processor to generate a plurality of supply plans that plan the ratio of the output power of the first fuel cell and the output power of the additional energy source over a predetermined period of time based on the predicted power demand.

According to at least some aspects, the data further enables the processor to: select an optimal supply plan from among the plurality of supply plans, wherein the optimal supply plan is selected to optimize at least one of efficiency, equipment cost, and degradation of the output power of the first fuel cell and/or the additional energy source; and adjust the control information based on the selection of the optimal supply plan.

According to at least some aspects, the optimal supply plan is selected based on results of simulating a control and state changes of the first fuel cell and the additional energy source according to each of the plurality of supply plans.

According to at least some aspects, the information about the power demand is received from at least one of a truck management system, a ship management system, a pipeline management system, a fuel tank management system, and a carbon credit system.

According to at least some aspects, the data further enables the processor to optimize the ratio of the output power of the first fuel cell and the output power of the additional energy source so that an output of the first fuel cell is stopped during a startup period determined in advance for the first fuel cell.

According to at least some aspects, the data further enables the processor to optimize the ratio of the output power of the first fuel cell and the output power of the additional energy source using an evaluation function based on a weighted evaluation of efficiency, equipment cost, and degradation of output power of the first fuel cell and/or the additional energy source.

According to at least some aspects, the data further enables the processor to perform a frequency analysis on variations in a power demand time series and then, based on the frequency analysis, update the control information for optimizing the ratio of the output power of the first fuel cell and the output power of the additional energy source.

According to at least some aspects, the first fuel cell and the additional energy source are installed in a common power plant.

According to at least some aspects, the processor and memory are also installed in the common power plant.

According to at least some aspects, the control information is further used by other power plants.

In some aspects, a non-transitory computer-readable medium comprising processor-executable instructions stored thereon is provided, where the processor-executable instructions enable a processor, when executed, to: receive information about a power demand for an output power of a first fuel cell and an output power of an additional energy source; generate control information that optimizes a ratio of the output power of the first fuel cell and the output power of the additional energy source to meet the power demand; and deliver a control output to the first fuel cell and the additional energy source according to the control information that optimizes the ratio of the output power of the first fuel cell and the output power of the additional energy source.

According to at least some aspects, the additional energy source comprises at least one of a second fuel cell, a storage battery, and a power generator.

According to at least some aspects, the information about the power demand is received from at least one of a truck management system, a ship management system, a pipeline management system, a fuel tank management system, and a carbon credit system.

In some aspects a method is provided that includes: receiving information about a power demand for an output power of a first fuel cell and an output power of an additional energy source; generating control information that optimizes a ratio of the output power of the first fuel cell and an output power of the additional energy source to meet the power demand; and delivering a control output to the first fuel cell and the additional energy source according to the control information that optimizes the ratio of the output power of the first fuel cell and the output power of the additional energy source.

In some aspects, a system is provided that includes: a power demand input to receive information related to a power demand; an output terminal providing communication capabilities with a fuel cell and an additional energy source, wherein the output terminal is used to provide a control output to the fuel cell and the additional energy source, wherein the control output comprises a first composition defining a first power to originate from the fuel cell and a second composition defining a second power to originate from the additional energy source; a processing unit that adjusts one or both of the first composition and the second composition to optimize a ratio of the first composition and the second composition; an output controller in communication with the processing unit and the output terminal, wherein the output controller causes the output terminal to adjust the first composition and the second composition according to the ratio adjustments made by the processing unit; and an orchestration controller in communication with the processing unit to provide information concerning optimization of the first composition and the second composition so as to enable the processing unit to adaptively adjust the first composition and the second composition to meet the power demand.

According to at least some aspects, the orchestration controller comprises a first layer processor in communication with the power demand input and a plurality of secondary layer processors.

According to at least some aspects, more than 50% of the plurality of secondary layer processors are located external to a plant where the first layer processor is located and wherein real-time communication between the first layer processor and the secondary layer processors is unpredictable.

According to at least some aspects, the first layer processor is located adjacent to the at least one processor from the plurality of secondary layer processors.

According to at least some aspects, each of the plurality of secondary layer processors includes a plurality of secondary layer additional processors as well as a plurality of third layer additional processors located in a remote location where real-time communication between the first layer processor and the secondary layer processors is unpredictable.

According to at least some aspects, the plurality of secondary layer processors further includes a plurality of fourth layer processors, and wherein the first layer processor is capable of communicating with each of the plurality of fourth layer processors through at least one of the plurality of second layer processors and at least one of the plurality of third additional layer processors.

According to at least some aspects, the first layer processor is in communication with a demand forecast unit and wherein the demand forecast unit computes a total power demand for a target consumer network.

According to at least some aspects, the system further includes an additional first layer processor that is connected to an additional fuel cell that is controlled by an additional processing unit.

According to at least some aspects, the first layer processor is configured to compute a conversion efficiency of the fuel cell by way of receiving inputs from the plurality of secondary layer processors.

According to at least some aspects, the first layer processor is configured to compute an evaluation function based on a combination weighted evaluation of a lifespan, fuel efficiency, capex investment, and degradation of the fuel cell and/or the additional energy source.

According to at least some aspects, one of the secondary layer processors implement a power management system and wherein the fuel cell, the additional energy source, the output terminal, and the output controller form a portion of the power management system.

According to at least some aspects, the power management system comprises a cracking management or a fuel cell system that provides information containing an optimization of the first composition and the second composition related to an aspect of preventing cracks of one or more components within the fuel cell according to an optimization function describing a lifetime of the fuel cell.

According to at least some aspects, the power management system comprises a cracking management or a fuel cell system that provides information to maintain the first fuel cell between approximately 20% and 80% of a load capacity of the fuel cell.

According to at least some aspects, the power management system comprises a cracking management or a fuel cell system that provides information to optimize the first composition and the second composition according to an optimization function that maximizes a conversion efficiency of the fuel cell.

According to at least some aspects, the power management system comprises a load management system to provide information concerning an optimization of the first composition and the second composition according to an optimization function that maximizes a conversion efficiency of the fuel cell by maintaining loading capacity data of the fuel cell and the additional energy source.

According to at least some aspects, the power management system comprises a carbon credit system to provide information to the processing unit such that an optimization of the first composition and the second composition is performed in accordance with a function to maximize carbon credit ratings.

According to at least some aspects, the additional energy source comprises a micro-gas turbine and wherein the power management system comprises a gray power system to provide carbon credit information such that optimization of the first composition and the second composition is performed according to a function to maximize a carbon credit rating.

According to at least some aspects, the first layer processor receives a transport utilization information from one of the plurality of secondary layer processors that is located remotely therefrom and based on the transport utilization information, optimizes the first composition and the second composition to maintain the first fuel cell between approximately 20% and 80% of a load capacity of the first fuel cell.

According to at least some aspects, the transport utilization information is received from a transportation management system that includes at least one of a truck management system, a vessel management system, and a pipeline management system.

According to at least some aspects, one of the plurality of secondary layer processors comprises a vessel management system.

Aspects of the present disclosure also contemplate one or more means for performing any one or more of the above aspects or aspects of the embodiments described herein.

The preceding is a simplified summary of the invention to provide an understanding of some aspects of the invention. This summary is neither an extensive nor exhaustive overview of the invention and its various embodiments. It is intended neither to identify key or critical elements of the invention nor to delineate the scope of the invention but to present selected concepts of the invention in a simplified form as an introduction to the more detailed description presented below. As will be appreciated, other embodiments of the invention are possible utilizing, alone or in combination, one or more of the features set forth above or described in detail below. Also, while the disclosure is presented in terms of exemplary embodiments, it should be appreciated that an individual aspect of the disclosure can be separately claimed.

BRIEF DESCRIPTION OF THE DRAWINGS

The present disclosure is described in conjunction with the appended figures:

Fig. 1 is a block diagram illustrating a system according to at least some embodiments of the present disclosure;

Fig. 2 is a block diagram illustrating details of a power management system according to at least some embodiments of the present disclosure;

Fig. 3 is a block diagram illustrating a crack management system according to at least some embodiments of the present disclosure;

Fig. 4 illustrates an efficiency surface and mechanisms for providing adjustments therein according to at least some embodiments of the present disclosure;

Fig. 5 illustrates power demand for different power consumers according to at least some embodiments of the present disclosure;

Fig. 6 is a table illustrating differences between different energy sources according to at least some embodiments of the present disclosure;

Fig. 7A is a first graph illustrating a degradation rate for an energy source according to at least some embodiments of the present disclosure;

Fig. 7B is a set of graphs illustrating different degradation curves as a function of different factors;

Fig. 8 illustrates a number of different optimizations possible for fuel cells according to at least some embodiments of the present disclosure;

Fig. 9 illustrates a graph showing an example optimization range for a fuel cell according to at least some embodiments of the present disclosure;

Fig. 10 is a table illustrating different energy source features according to at least some embodiments of the present disclosure; and

Fig. 11 is a flow diagram illustrating a method according to at least some embodiments of the present disclosure.

DETAILED DESCRIPTION

The ensuing description provides embodiments only and is not intended to limit the scope, applicability, or configuration of the claims. Rather, the ensuing description will provide those skilled in the art with an enabling description for implementing the embodiments. It will be understood that various changes may be made in the function and arrangement of elements without departing from the spirit and scope of the appended claims.

Any reference in the description comprising a numeric reference number, without an alphabetic sub-reference identifier when a sub-reference identifier exists in the figures, when used in the plural, is a reference to any two or more elements with the like reference number. When such a reference is made in the singular form, but without identification of the sub-reference identifier, it is a reference to one of the like numbered elements, but without limitation as to the particular one of the elements being referenced. Any explicit usage herein to the contrary or providing further qualification or identification shall take precedence.

Before describing the various embodiments, it is helpful to understand the possible meaning of various terms used herein.

Fuel cells, as used herein, may refer to any suitable type of device or collection of devices that includes an electrochemical cell to convert the chemical energy of a fuel and an oxidizing agent into electricity through a pair of redox reactions. According to some embodiments, fuel cells may be used preferentially due to their high conversion efficiency, and operated at a load factor of between 20% and 80%, for example, within the capacity range, without being too low or too high. Fuel cells may be operated at a power output setting within a certain frequency of change in the rate of change in demand power (for example, once every 15 minutes). Fuel cells may be operated in such a way that they are not stopped as much as possible.

Micro-gas turbines, as used herein, may refer to any suitable type of device or collection of devices that can use a variety of fuels, including natural gas, biogas, biodiesel, kerosene, and associated gas to produce an energy output. A micro-gas turbine may include a compressor, combustor, turbine, alternator, recuperator, and/or generator. Although micro-gas turbines do not have particularly high conversion efficiency, they are suitable for covering sudden increases in power demand because they can quickly reach stable output from the start of operation. They may be operated at a load factor of between 20% and 80%, which is not too low or too high within their capacity range. Micro-gas turbines may preferably be operated within a certain frequency range of power demand fluctuation (e.g. at least once every 15 minutes, but no more than once every minute). When use thereof is not needed, it may be desirable to stop the operation of a micro-gas turbine to avoid unnecessary wear and tear on the device(s).

Batteries, as used herein, represent another energy source, exhibit a low power density and are heavy and large, but they can respond immediately to peak demand, etc., so it is appropriate to have them take charge of the component of power demand that fluctuates at high speed. Operating a battery or collection of batteries within the capacity range, not too low or too high, for example at a load factor of 20% to 80%. In some embodiments, a battery may generate the amount of electricity that is obtained by subtracting the amount of electricity generated by the fuel cell and the amount of electricity generated by the micro gas turbine from the amount of electricity demanded (including the amount of electricity that fluctuates at least once per minute).

Batteries may also be used to store energy, including but not limited to, when the power demand is low so as to load a fuel cell or a micro-gas turbine when the loading is less than 20%. According to at least some embodiments, if the load factor of the fuel cell is 20% and the demand for electricity temporarily falls below this level, or if the speed of change in demand for electricity is fast and the demand for electricity temporarily falls in the downward direction, the battery will be charged to maintain the operation of the fuel cell and keep the load factor of the fuel cell at rate is 80%, and if the demand for electricity temporarily exceeds this, or if the speed of change in demand for electricity is fast and the demand for electricity temporarily swings in the upward direction, then it is supplemented by a micro gas turbine, etc., and if this is still not enough, it is discharged, and the operation of the fuel cell is kept within the limit conditions.

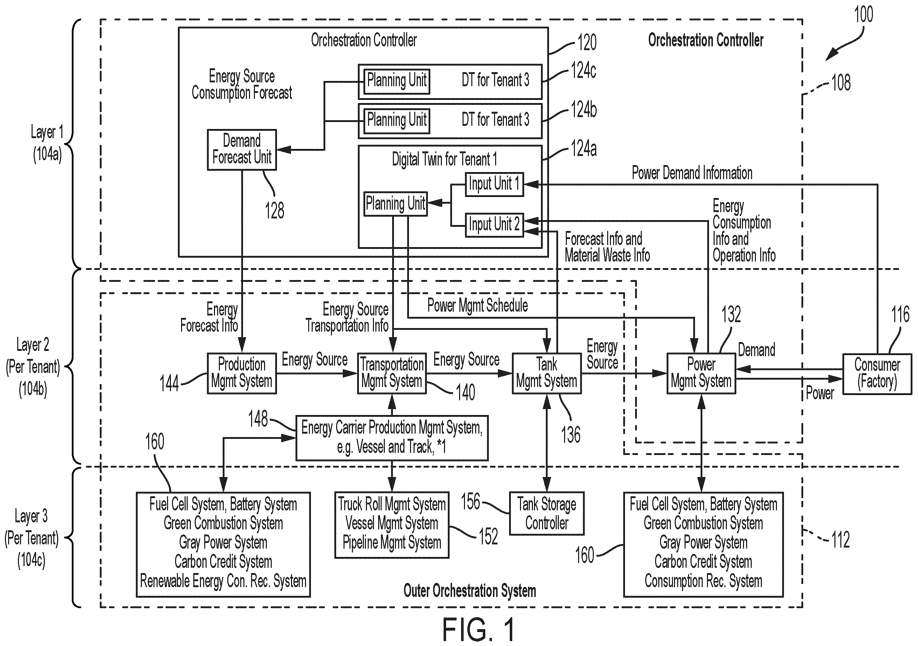

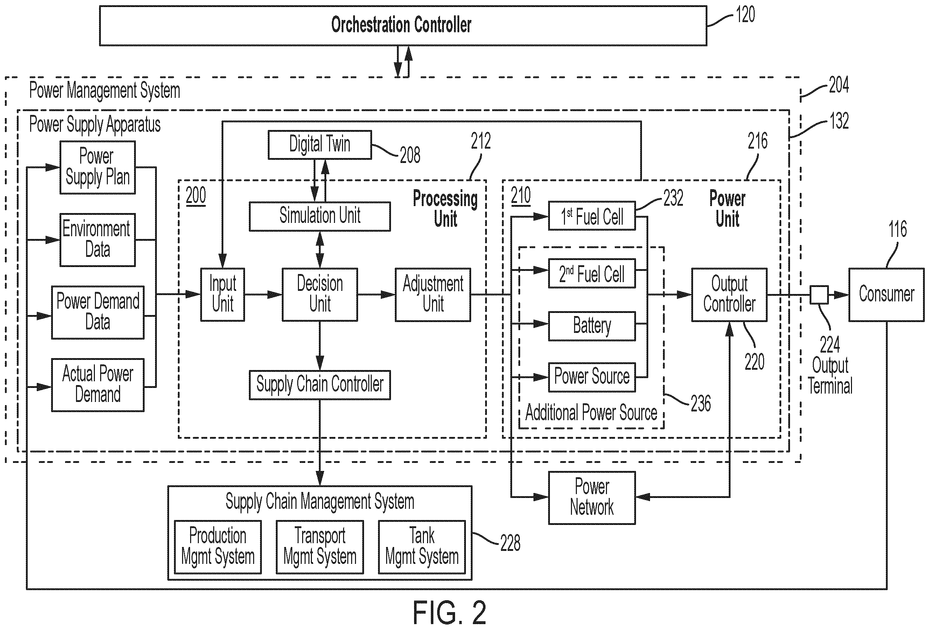

Fig 1. Illustrates a block diagram of a power supply apparatus 204 according to at least some embodiments of the present disclosure. Fig. 2 illustrates the power management system of the power supply apparatus 204 of Fig. 1 for supplying power to a target consumer network 116. As shown in Fig. 1 and Fig. 2, the power supply apparatus 204 comprises a first fuel cell 232 and an additional power source 236, which may also be referred to as an additional energy source. The additional power source 236 may include one, two, three, or more different types of energy sources, such as a second fuel cell, a battery, a power source (e.g., a power generator), and the like. The additional power source 236 may also include a plurality of energy sources of the same type. The power supply apparatus 204 may also include a power demand input unit for receiving an information related to the power demand of the supply target of the power unit 216, an output terminal 224 in electrical communication with both the first fuel cell 232 and the additional power/energy source 236. The additional power/-energy source 236 shown in Fig. 2 is configured to supply electricity directly to the target consumer network 116, but in another embodiment, the additional power/energy source 236 may comprise a power generator configured to generate electricity. In yet another embodiment, the additional power/energy source 236 may be consumed to generate heat energy, kinetic energy or energy of other kind that is not in the form of electric energy. For example, the target consumer network 116 may be a vessel and the additional power/energy source 236 may be consumed to generate kinetic energy, i.e. to propel the vessel to move forward, or as heat energy to heat up the vessel.

As noted above, the additional power/energy source 236 may comprise a second fuel cell, a battery or an additional power source of different kinds as compared to the battery or the fuel cell. The additional power/-energy source may comprise a battery, a micro-gas turbine, SOFC, PEMFC, or the like. The power output by the output terminal 224 comprises a first composition of power originating from the first fuel cell 232 and a second composition of power originating from the additional power/energy source 236. The output in communication with the output terminal 224 is configured to adjust one or both of the first composition and the second composition. A processing unit 212 is shown to be connected to the output controller 220 so as to optimize a ratio of the first composition and the second composition. The processing unit 212 may comprise a processor, or a plurality of processors working collectively for performing the optimization task. As shown in Fig. 2, the processing unit 212 of the power supply apparatus 204 is optionally in communication with an orchestration controller 120 to provide information concerning optimization of the first composition and the second composition so as to enable the processing unit 212 to adjust adaptively the first composition and the second composition to match the power demand. When the target consumer network 116 is of a larger scale plant, matching and optimizing the power demand may not be feasible without simulation, modeling of forecast through the orchestration controller. For a small-scale consumer network 116, the orchestration controller is optional. For the orchestration system 100 configured to supply power or energy to a large scale. By way of an example, a target consumer network such as a power plant that requires a large-scale power supply may require more than 5000 kilowatt-hours (kWh) of electricity per month. In yet another example, a target consumer network such as a remote town that requires such an orchestration system 100 may consume approximately more than 1000 kWh per month. However, whether an orchestration controller 120 is needed shall depends on the capability of supplying the power to meet demand that fluctuates with additional simulation or modeling by the orchestration controller 120 and not merely by the energy consumed.

The processing unit 212 and the output controller 220 may collectively form a portion of a power management system 132 as shown in Fig. 2. The power management system 132 and the orchestration controller 120 form a part of an orchestration system 100, which is illustrated in detail in Fig. 1. As shown in Fig. 1, the orchestration system 100 may comprise a central orchestration system 108, which has the orchestration controller 120 and the power management system 132, and an outer orchestration 112 system, which comprises an energy carrier production management system 148, a production management system 144, a transportation management system140, and/or a tank management system 136.

The central orchestration system 108 may comprise one or more sub-systems 124a, 124b, 124c, which collectively implementing the orchestration controller 120 and the processing unit 212 of the power management system 132 from a centralized location. The sub-systems 124b, 124c may be connected to a power management system (not shown) that is substantially similar to the power management system 132 that is connected to the sub-system 124a. The centralized location may be in close proximity with the first fuel cell 232 and the additional power/energy source 236 for the reason that communication between the first cell 232 and the processing unit 212 would be more reliable, including but not limited to, at an on-site power plant where power is generated. In another embodiment, the orchestration controller 120 and the processing unit 212 may be located in a different location respectively. The orchestration controller 120 may perform high level optimization but may not be in continuous communication with the processing unit 212 (e.g., even if communications between the two components break down for a period of time), such that the operation of the processing unit 212 and the orchestration controller 120 would still carry on. In another embodiment, the processing unit 212 may comprise one or more processors located in a first location, for example at the on-site power plant, whereas the orchestration controller 120 may comprise one or more processors located in a second location that is distanced away from the first location, for example, at a safe location to store computer servers such that any fire incidents at the on-site power plant will not compromise the servers and the data. In yet another embodiment, the orchestration controller 120 and the processing unit 212 may be located at a cloud server that are both far from the on-site plant where power is generated.

The outer orchestration system 112 may comprise a plurality of processors located in different locations according to the functionality. The plurality of processors may reside in a cloud location where communication to the internet can be reliable. In one of the embodiments, the outer orchestration system 112 is in communication with the central orchestration system 108 but the two systems which form the orchestration system are not expected to be in communication all the time. On the contrary, the communication between the two systems shall be performed at a predetermined interval, or as and when the communication between the two systems is needed. In yet another embodiment, the outer orchestration system 112 may comprise a plurality of processors located in the same location, but having different access controls that requires separation and isolation of the system due to security reasons, for example. For example, transportation management system 140 may be administrated and accessed by a first group of workers for a first company, and the tank management system 136 are accessed and administrated by a different group of workers who work for a second company. For securities reasons, it may be desired that information access shall be limited to the necessary system administrators who are tasked to carry out different tasks so that not everyone in either the first company or the second company has the complete information.

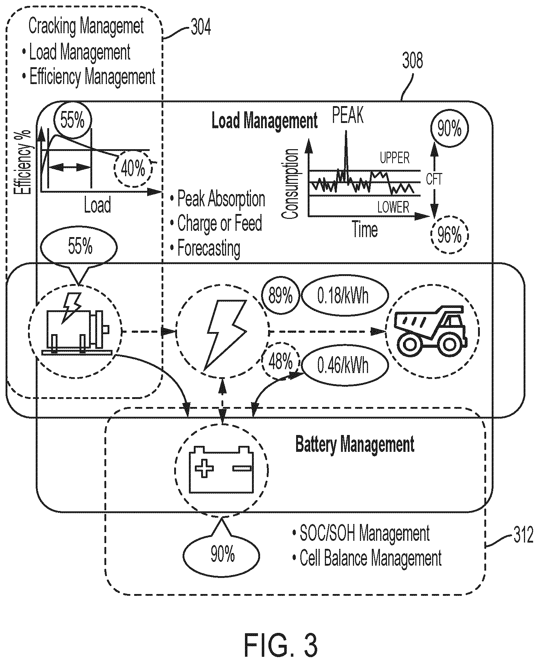

As shown in Fig. 1, the orchestration system is organized in three layers 104a, 104b, 104c. However, in another embodiment, the first layer 104a and the second layer 104b, or the second layer 104b and the third layer 104c may be combined to form a two-layer orchestration system. In yet another embodiment, the orchestration system may comprise more than three layers in that some of the layers may be further separated into two layers. For example, a fuel cell system and a carbon credit system 160 may be arranged in a third layer 104c or a fourth layer arrangement. In yet another example, the power management system 132 may comprise a dual-level orchestration system separated into a cracking management system 304, a load management system 308, a battery management system 312 as shown in Fig. 3.

The location of the processors and the orchestration system is designed in such a way that a processor is located adjacent to carry out a function that's needed, and optimization between different functions can be performed by allowing different systems to communicate as and when needed, or at a predetermined intervals that is usually not frequent enough to perform tasks that requires real time computation. Efficiency can also be obtained through task separation in this manner. When the location of second layer 104b and/or third layer 104c are resided in different location, or at a location remotely distanced from the first layer104a, the structure of the orchestration system 100 may improve computing efficiency by enabling each processors at the second layer 104b to be located adjacent to where faster computing power are required, while maintaining the overall function of the orchestration system 100. In another embodiment where the second layer 104b resides in a same building or a same location, the multi-layer orchestration system 100 improves computing efficiency for the segregation requirement mentioned previously.

Different sub-systems can also communicate and improve optimization of adjacent unit(s). For example, the processor in tank management system 136 is in communication with the transportation management system 140, and the transportation management system 140 is in communication with the production management system 144 appreciated, the situation in the tank management system 136 would impact the transportation management system 140 or vice versa. As understood by a person skilled in the art, the situation of the transportation management system 140 would largely impact whether usage of the storage capacity of the tank management system 136. Similarly, the situation in the transportation management system 140 would impact the production management system 144 or vice versa. Consider a scenario where one of the tanks is in a faulty situation where the entire storage system would not cope with the scheduled arrivals of fuel. In this situation, the transportation management system 140 has to slow down, and the production management system 144 in turns has to slow down. Such effects of the supply chain may impact the cost of energy. In the embodiment shown in Fig. 2, where different fuel cells are used, a slowdown of one type of fuel cell may mean speeding up delivery of a different fuel cell type. Optimization of the fuel cell herein, where optimization of the power supply apparatus 204 to achieve desired frequency, power efficiency etc. will also be affected, and may be re-computed.

As shown in Fig. 1, the orchestration controller 120 comprises a first layer processor 104a in communication with the power demand input and a plurality of secondary layer processors 104b. In the embodiment shown in Fig 1, the plurality of secondary layer processors 104b comprise a first secondary layer processor for implementing the production management system 144, a second secondary-layer processor for implementing the transportation management system 140, a third secondary-layer processor for implementing the tank management system 136, a fourth secondary layer processor for implementing the power management system 132, and a processor in the consumer (factory) that is configured to communicate with the orchestration controller 120. The first layer processor is in communication with a demand forecast unit 128, that is configured to compute total power demand of a target consumer network 116. In the embodiment shown in Fig. 1, the orchestration system 100 may comprise a first second layer processor resided within the power management system 132. The first layer processor and the first second layer processor are part of the central orchestration system 108, which may be located within a plant where power is generated 116. In other words, the first layer processor is located adjacent to the processing unit where real time communication is available. On the contrary, more than 50% of the plurality of secondary layer processors resided within the outer orchestration system 112 are located external to a plant 116, where the first layer processor is located where real time communication is unavailable at a specific time that is unpredictable. In another embodiment, the central orchestration system 108 may comprise a first second layer processor (processing unit) located within the plant 116, but the orchestration controller 120 may be located in a location different from the plant 116 or distanced away from the plant 116.

In an embodiment with more than two layers of processors as shown in Fig. 1, the orchestration system 100 comprises a plurality of second layer additional processors, and a plurality of third layer additional processors located in a remote location where real time communication with the first layer processor is unavailable. The first layer processor is in communication with a portion of the plurality of third layer additional processors through one of the plurality of second layer additional processors. For example, the truck roll management system, the vessel management system and/or the pipeline management system 152 is in communication with the orchestration controller 120 via the second layer additional processors (e.g., the transportation management system 140 and energy carrier management system 148). Similarly, in another embodiment where four layers of processors are needed where the orchestration system comprises a plurality of fourth layer additional processors, the first layer processor may be in communication with each of the plurality of fourth layer additional processors through at least one of the plurality of second layer additional processors and at least one of the plurality of third layer additional processors.

Optimization within a functional block can be done vigorously by each of the respective second layer processors of the systems shown in layer 2, for example, in the processing unit of the power supply apparatus 204, however, the coordination and the control through the orchestration controller 120, which usually take place at a much lower frequency. For example, for optimization purposes, the second layer processor (e.g., processing unit 212) at the power management system 132 may prepare a real-time computation but the communication between the second layer processor (e.g., processing unit 212) and the orchestration controller 120 can take place even at once per hour, once per day, once per week, or at some other interval (e.g., a regular or irregular interval of time). In a similar manner, a processor of the tank management system 136 is configured to optimize tasks related to the tank management, a processor of the transportation management system 140 is configured to optimize tasks related to the transportation, a processor for the production management system 144 is configured to optimize tasks related to the production of fuel respectively at a higher frequency. However, each of the second layer processor may communicate with the orchestration controller 120 or with each other at a lower frequency.

The orchestration system shown in Fig. 1 may be configured to receive or support multiple tenants. In the field of supplying power, the market may be served by different suppliers, each of which is referred to as a tenant in Fig. 1. Different digital twins 124a, 124b, 124c may be provided for each of the tenants. Each digital twin 124a, 124b, 124c may include a processing unit 212, a planning unit, and one or more input units. A digital twin is a virtual representation of a physical object, system, or process. It is designed to accurately reflect its real-world counterpart by using real-time data, simulations, machine learning, and reasoning to help make decisions. In the context of Fig. 1 a digital twin for a tenant is a virtual representation of physical optimization of fuel or energy for supplying power to a targeted power network 116. This includes simulation, modeling, calculation and computations on different aspects of functions of the entire chain from production, transportation, storage, and aspects related to generation of power for supplying power to the targeted power network 116 that can be performed in a processor in the first layer of the orchestration controller 120 and/or by the second layer processors 104b.

All the tenants in combination would supply power to the market. When one tenant is down or having issues, the other tenants may be triggered to change the output supply, and optimization may be affected if not managed well. The answer to that is in Fig. 1, where different tenants may have a similar system that are interconnected within the orchestration system. For example, the additional tenant would have an additional first layer processor that is connected to an additional fuel cell that is controlled by an additional processing unit that is not connected to the first layer processor and the processing unit shown in Fig. 1 and Fig. 2, but the communication is via the orchestration system. Each tenant is given a demand forecast, and when one is down, the forecast will be distributed and the effect of the change may be absorbed. Each tenant may belong to different business owners and may be competing with each other, but when needed, the collaboration may be done through the orchestration system in the manner explained above.

In some embodiments, the orchestration controller 120 may service a plurality of tenants (e.g., a first tenant, a second tenant, a third tenant, ..., an Nth tenant, etc.). Each tenant may include on more components of the orchestration system depicted and described herein. As a non-limiting example, one, two, three, four, or more tenants may have its own plant or power network 116. Each of the tenants may also have one or more of a power management system 132, a fuel tank management system 136, a transport management system 140, and/or a fuel production management system 144.

The term "processor," "processing unit," or "processors," as used herein, may refer to any suitable type of processing device and/or micro processing device. Illustratively, but without limitation, a processor may include an Integrated Circuit (IC) chip, a microprocessor, a Central Processing Unit (CPU), and Graphics Processing Unit (GPU), an Application Specific Integrated Circuit (ASIC), a Field-Programmable Gate Array (FPGA), a semiconductor device, combinations thereof, and the like. A processor may include programmable logic functionality, such as determined, at least in part, from accessing machine-readable instructions maintained in a non-transitory data storage, which may be embodied as circuitry, on-chip read-only memory, computer memory, data storage, etc., that cause the processor to perform the steps or processes according to the instructions. Processor may be embodied as a single electronic microprocessor or multiprocessor device (e.g., multicore) having electrical circuitry therein which may further comprise a control unit(s), input/output unit(s), arithmetic logic unit(s), register(s), primary memory, and/or other components that access information (e.g., data, instructions, etc.), such as received via a bus, executes instructions, and outputs data, again such as via a bus.

In some embodiments, a processor may include a shared processing device that may be utilized by other processes and/or process owners, such as in a processing array within a system (e.g., blade, multi-processor board, etc.) or distributed processing system (e.g., "cloud", farm, etc.). It should be appreciated that processor is a non-transitory computing device (e.g., electronic machine comprising circuitry and connections to communicate with other components and devices). A processor may operate a virtual processor, such as to process machine instructions not native to the processor (e.g., translate the VAX operating system and VAX machine instruction code set into Intel® 9xx chipset code to enable VAX-specific applications to execute on a virtual VAX processor). However, as those of ordinary skill understand, such virtual processors are applications executed by hardware, more specifically, the underlying electrical circuitry and other hardware of the processor (e.g., processor). A processor may, alternatively or additionally, be executed by virtual processors, such as when applications (i.e., Pod) are orchestrated by Kubernetes. Virtual processors enable an application to be presented with what appears to be a static and/or dedicated processor executing the instructions of the application, while underlying non-virtual processor(s) are executing the instructions and may be dynamic and/or split among a number of processors.

In addition to the components of processor, computer memory and/or data storage for the storage of accessible data, such as instructions, values, etc. may be utilized by a processor or processing unit. Examples of data and/or instructions that may be stored in memory include, without limitation, one or more models and one or more appropriate instruction sets. As will be described in further detail herein, a processor may be configured to access data in the form of data models and/or instructions and perform tasks with the support of such data models and/or based on routines described in the instructions.

Communications between processors, processing units, and other systems described herein may be facilitated by a network, which may include a wired network (e.g., Ethernet), wireless (e.g., WiFi, Bluetooth, cellular, etc.) network, or combination thereof. Such networks may support machine-to-machine communications across short or large distances. In other embodiments, network may be embodied, in whole or in part, as a telephony network (e.g., public switched telephone network (PSTN), private branch exchange (PBX), cellular telephony network, etc.).

It should be appreciated that computer readable data may be sent, received, stored, processed, and presented by a variety of components. It should also be appreciated that components illustrated may control other components, whether illustrated herein or otherwise. For example, one input/output device may be a router, a switch, a port, or other communication component such that a particular output of processor enables (or disables) input/output device, which may be associated with a network, to allow (or disallow) communications between two or more nodes on a network. One of ordinary skills in the art will appreciate that other communication equipment may be utilized, in addition or as an alternative, to those described herein without departing from the scope of the embodiments.

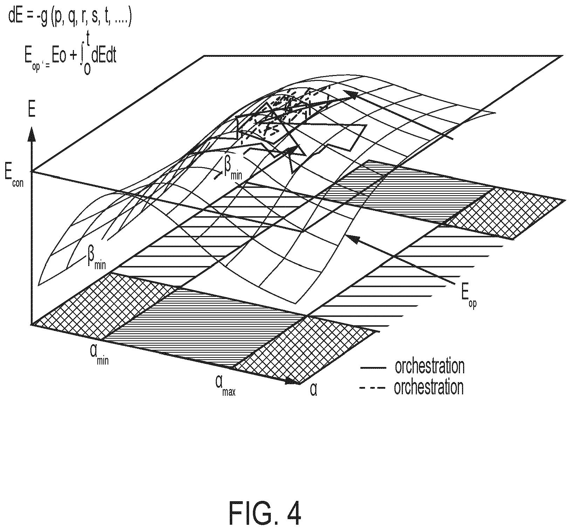

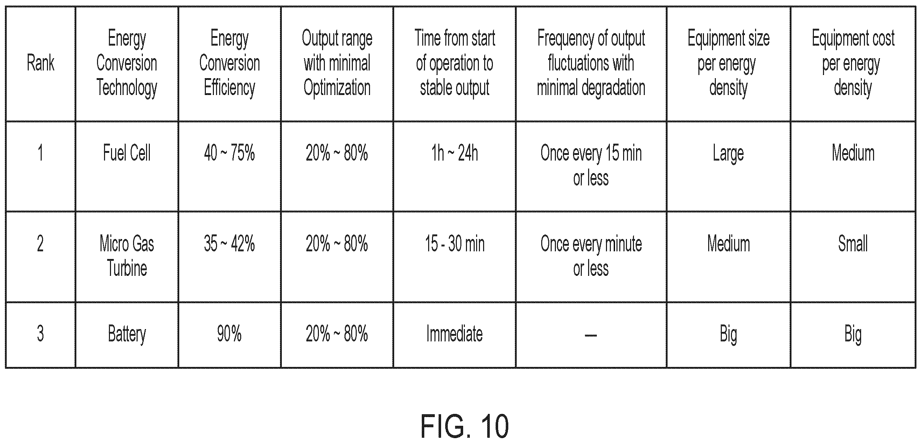

Referring now to Figs. 4-10, various aspects of optimization will be described in accordance with at least some embodiments of the present disclosure. The conversion efficiency of a fuel cell, for example, can be expressed as a function of many parameters, including (1) observable and controllable: output power, fuel temperature, fuel pressure, coolant temperature, etc., and (2) observable but uncontrollable: power demand, degree of degradation, time since start-up, fuel purity, etc.

$$(1)\ E = W/V$$

$$(2)\ E = f(a, b, c, d, e, ...)$$

Fuel cells have multiple parameters (e.g., a, b, c, d, e.... etc.), the efficiency E (defined by power output W and input hydrogen volume V (see equation (1)) changes dynamically (see equation (2)). In Fig. 4, for illustration purpose, the efficiency surface by simplifying to two dimensions with a and b parameters is shown. Fig. 4 specifically illustrates a two-dimensional efficiency space in which an efficiency surface at a given instant is shown and where the Eop surface is the space to be controlled. In reality, there are multiple parameters, and optimization is performed across the multiple dimension plane that cannot be put into a two-dimensional nor a three-dimensional graph.

By the way, a, b, c, ... parameters each have appropriate physical and logical constraints for various reasons, and if we can control the operation in the top region that exceeds the Econ plane with the Eop surface as the threshold, where the Eop surface is set as the target value, then it is the optimal control.

The operating point moves around to every point on the Eop surface, as shown in the orange curve, but if optimization control can keep it within this summit region, it can operate at high efficiency. As a result, the cost of power generated (e.g., the amount of hydrogen input required) can be minimized.

$$(3) dE = -g(p, q, r, s, t, \dots)$$

$$(4) Eop = E0 + \int_0^t dEdt$$

Furthermore, the degradation is caused by dE, which is dynamically determined by multiple parameters (e.g., p, q, r, s, t...). etc.) by dE, which is dynamically determined by dE (equation (3)). The efficiency decay progresses from moment to moment. Considering the accumulation from the initial value $E_0$, $E_{op}$' is calculated and the same operation is performed to obtain an optimal solution more in line with the actual behavior.

Parameters a, b, c, ... p, q, r, ... from equation (1) may be observable and constrained, from equation (2) may be observable and controllable, and from equation (3) may be observable but not controllable. Depending on the design of model f, equation (3) may not be present, but equations (1) and (2) are present.

Equation (1) is, for example, when fuel cells are used for industrial purposes, the amount of power demand based on the operating conditions of the plant is absolute and is a binding condition that takes precedence over anything else. For example, when used for ship or automobile applications, the power demand of the power motor, which constantly fluctuates according to the operating conditions and the load status of the loaded cargo, is absolute and is a binding condition. Under that constraint condition, the optimal control described above is attempted using other controllable quantities. Models f and g can be calculated each time in the form of a function, or they can be a reference table such as a look-up table. They can also be composite tables with values expressed in the form of equation (4), even if they are not independent of each other.

In addition, future values of each parameter can be predicted by production planning, extrapolation of past patterns, Artificial Intelligence (AI), etc., and operating conditions can be planned in advance, so that optimal operating conditions can be further improved by generating a little more power at the expected peak, storing it in the battery, and discharging it during peak periods. The operating conditions can be made even more precise.

Referring to the above explanation, conversion efficiency can be defined in many ways and may be depending on the parameters. For example, the conversion efficiency may be focusing on power conversion, or lifetime of the cell, or overall cost, or a combination of all. For multiple factors efficiency consideration, each purpose described may be put into the same equation through a weighting factor. In other words, the first layer processor is configured to compute an evaluation function based on a combination weighted evaluation of a lifespan, fuel efficiency, capex investment, and degradation of the combination of power supplies. In general, the computation of the conversion efficiency will be done through the different layers of processors, wherein the first layer processor is configured to compute a conversion efficiency of the fuel cell by way of receiving inputs from the plurality of secondary processors for one or more parameters. For example, as explained previously, the fuel cell is to be operated between 20% and 80% of load capacity to obtain most optimized efficiency and power conversion, the first layer processor 104a in the orchestration controller 120 receives inputs from the power management system 132 and tank management system 136, or even third layer processors 104c such as the fuel cell system, battery system 160. The inputs from tank management system 136 would enable the first layer processor to ensure that by using a certain fuel cell by a high percentage, the supply shall be sufficient. Similarly, the inputs from battery management system and the fuel cell system 160 would enable the computation on how the burden of the fuel cell can be migrated to the battery.

As shown in Fig. 3, the power management system can be broken into cracking management system 304 (also referred as fuel cell system), battery system 312, and load management system 308. The cracking management system 304 may be configured to provide information concerning optimization of the first composition and the second composition in the aspect of preventing cracks of components within the fuel cell according to an optimization function that maximizes at least lifetime of the fuel cell.

In one embodiment, the cracking management system 304 is configured to provide information so as to maintain the first fuel cell between approximately at 20% and 80% of a load capacity of the first fuel cell to ensure high efficiency of power conversion while maintaining other objectives of the conversion such as cost consideration or lifespan of the first fuel cell. In yet another embodiment, the cracking management system 304 may be configured to provide information concerning optimization of the first composition and the second composition according to an optimization function that maximizes conversion efficiency of the fuel cell, and not just between 20% and 80% by prioritizing conversion efficiency over other objectives. As this process is more than preventing or mitigating the formation of cracks, the cracking management system 304 may also be referred to as fuel cell systems.

Cracking management in fuel cells primarily involves strategies to prevent and mitigate the formation of cracks in various components, such as the membrane electrode assembly (MEA) and catalyst layers. Cracks can significantly impact the performance and durability of fuel cells by affecting mass transfer, leading to issues like flooding or reduced oxygen diffusion. Important aspects related to cracking management include: material selection; manufacturing techniques; hydration management;

structural design; and monitoring/maintenance. By addressing these factors, the performance and durability of fuel cells can be significantly improved, ensuring more reliable and efficient energy production.

As shown in Fig. 3, the load management system 308 is another system of the power management system. The load management system 308 may be configured to provide information concerning optimization of the first composition and the second composition according to an optimization function that maximizes conversion efficiency of the fuel cell by maintaining loading capacity data of the fuel cell and the additional power source. The load management system 308 may be configured to compute an efficiency range data for the first fuel cell. The load management system 308 communicates with the processing unit such that the first fuel cell and the second power source operate within the first predetermined efficiency range and the second predetermined efficiency range respectively. By ensuring operation in such predetermined efficiency, a more stable operation can be achieved. For the same reason, fuel cells shall be prevented to operate or loaded up before a predetermined time (e.g., a startup time). Consider a first fuel cell A, the fuel cell has a start-up time (time A) during which degradation is higher than a predetermined acceptable value. In other words, if the first fuel cell A is loaded before time A from time zero, the degradation would be much higher.

For a system with a large number of fuel cells of many types, the load management system 308 is configured to avoid operating those fuel cells before the respective startup time. Startup time is just one of the many parameters to be considered. For this reason, the load management system 308 configured to compute optimization parameters for the power output to be drawn from the first fuel cell and all of the plurality of additional fuel cells and those parameters may be communicated throughout the orchestration system 100 for further optimization or for optimization of other process. For example, the consuming patterns of a type of fuel cell can be communicated to the supply chain management system 228, which may include a tank management system as well as the production management system respectively for optimization of the tank storage cost efficiency and for the production timing optimization, for example. When a large number of fuel cells of different types are utilized at the same time, the loading management system is configured to compute optimization parameters for the power output to draw power from each of the fuel cells (the first fuel cell and all of the plurality of additional fuel cells) such that each fuel cell operates between approximately 20% and 80% of a load capacity. In this way, a more stable fuel cell operation can be ensured, which in turn would help the longevity of the fuel cells.

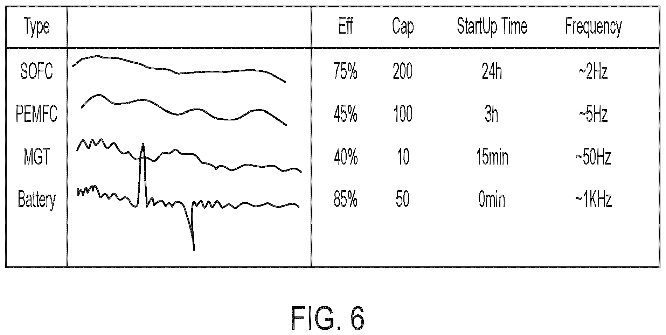

As shown in Figs. 6-10 and as described in further detail herein, each energy source, such as fuel cells, power generators, micro-gas turbines, etc. may exhibit different behaviors and comprise different operating frequencies where degradation becomes unacceptable. Unacceptable degradation may occur when the operating frequency of a fuel cell, for example, is higher than the maximum operating frequency. One aspect of optimization may be to perform frequency analysis, make an appropriate forecast and avoid operating the fuel cell higher than the respective maximum operating frequency. For avoidance of doubt, the frequency analysis described herein shall be differentiated from the frequency of an AC supply, or how frequent power is consumed. For a system where a large number of fuel cells of different types are involved, the optimization can be achieved through machine learning model and digital twin 208 to perform simulation through the orchestration system. For this, the battery management system residing within the power management system 132 operates closely adjacent to the battery. For example, the battery management system may be configured to monitor a frequency value of the power output so as to avoid operating the first fuel cell higher than the maximum operating frequency while optimization calculation is performed at the first layer processor with machine learning models. While the machine learning model and digital twin are explicitly shown to be included in the load management system and the cracking management system (fuel cell system), a similar optimization through machine learning model and digital twin for computation may be performed. The battery management system is configured to implement peak shaving with the battery energy storage where additional energy generated may be stored to the battery, and power may be drawn from the battery to avoid operating fuel cell higher than 80% of load capacity.

In countries where regulation for carbon credit rating, the orchestration system may comprise a carbon credit system configured to provide information to the processing unit such that optimization of the first composition and the second composition is performed in accordance with a function to maximize carbon credit rating. In a system where some non-carbon fuel cells are used (example micro-gas turbine), the power management system comprises a gray power system configured to provide information carbon credit information such that optimization of the first composition and the second composition is performed in accordance with a function to maximize carbon credit rating. A gray power system may refer a power system that relies on fossil fuels, such as coal, oil, and natural gas. These systems are characterized by higher carbon emissions and environmental impact compared to renewable energy sources. The term "gray" is used to distinguish these traditional energy sources from "green" power systems, which use renewable energy like solar, wind, and hydroelectric power. The carbon rating of a fuel cell refers to its carbon emissions, typically measured in pounds of CO2 per megawatt-hour (lbs $CO_2$/MWh). Fuel cells are known for their lower carbon emissions compared to traditional fossil fuel power plants. For example, while coal power plants emit around 2,065 lbs CO2/MWh and natural gas plants emit between 895 and 1,307 lbs CO2/MWh, fuel cells have a much lower emission rate, ranging from 679 to 833 lbs CO2/MWh. This makes fuel cells a more environmentally friendly option for power generation, contributing to reduced greenhouse gas emissions and a smaller carbon footprint.

Each fuel cell may have a different carbon rating and by limiting some higher rating type of fuel cell, it may become possible to enable optimization of the rating. As shown in Fig. 1, the orchestration system may comprise a transportation management system 140, which may have at least one of a truck roll management system, a vessel management system, and a pipeline management system 152, depending on the mode of transportation of the fuel cell to the destination. The fuel cell may be ammonia that may be generated using clean energy sources as a way to store energy in a location where clean energy source is available, and then send to another location, for example big cities where the clean energy source is unavailable. The production of the fuel cell may be managed through the production management system where ammonia is synthesized. The synthesis of the ammonia would involve combining nitrogen and hydrogen to form ammonia. For use in fuel cells, ammonia can be cracked into nitrogen and hydrogen. This hydrogen can then be used in hydrogen fuel cells. The cracking process involves heating ammonia in the presence of a catalyst to produce hydrogen and nitrogen. Alternatively, ammonia can be directly used in certain types of fuel cells, such as Solid Oxide Fuel Cells (SOFCs) and Proton-Conducting Ceramic Fuel Cells (PCFCs). By utilizing these processes, ammonia can be effectively produced and used as a fuel in various types of fuel cells, offering a promising pathway for clean energy applications.

At various locations, the fuel cell may be stored and managed through the tank management system. While a larger tank storage is needed at the location where the energy is to be consumed, storage may be needed during transportation too. While some means of transportation such as pipeline management, the supply may be easier to control, transportation through vessel and truck (via vessel management system) and truck roll management system, optimization is become more critical because longer days in storage or longer days in vessel or truck means higher cost and higher risk. The would be a delay in terms of weeks not just days and the supply management to ensure continuous supply would be hard to achieve without such orchestration tools as described in Fig. 1. Consider an example of a system where a large number of fuel cells of different types, the supply chain would be highly unpredictable due to the nature of energy source (for example days with strong sunlight) or weather conditions (for shipping schedule), accidents (on road or sea route). The storage (tank) may be optimized and has to be within a limited number to keep cost low. As the production management system 144, the transportation management system 140 and the tank management system 136 are part of the outer orchestration system 112 that located at a location remotely as compared to the power management system, any changes would take a time.

The first processor may be configured to receive information from the plurality of second layer processors from the production management system 144, the transportation management system 140 and tank management system 136 respectively. For example, the first processor may be configured to receive a tank utilization information from the secondary layer processor of the tank management system that is remotely located. Depending on tank utilization information, the processing unit 212 optimizes the first composition and the second composition in order to maintain the first fuel cell between approximately 20% and 80% of a load capacity of the first fuel cell. Consider a situation where the tank of a specific fuel cell is drying up, before the processing unit 212 would be configured to lower down the load capacity. On the contrary, fuel cell types where tank availability is low (too much of the same type), the loading has to be increased many days before storage space becomes a problem.

In a similar manner, the processing unit 212 may be communicating with the production management system and the transportation management system to speed up or slow down production or shipment, and conversely, the processing unit may receive inputs from the production management system and the transportation management system to increase or decrease loading of a specific fuel of a specific fuel cell type.

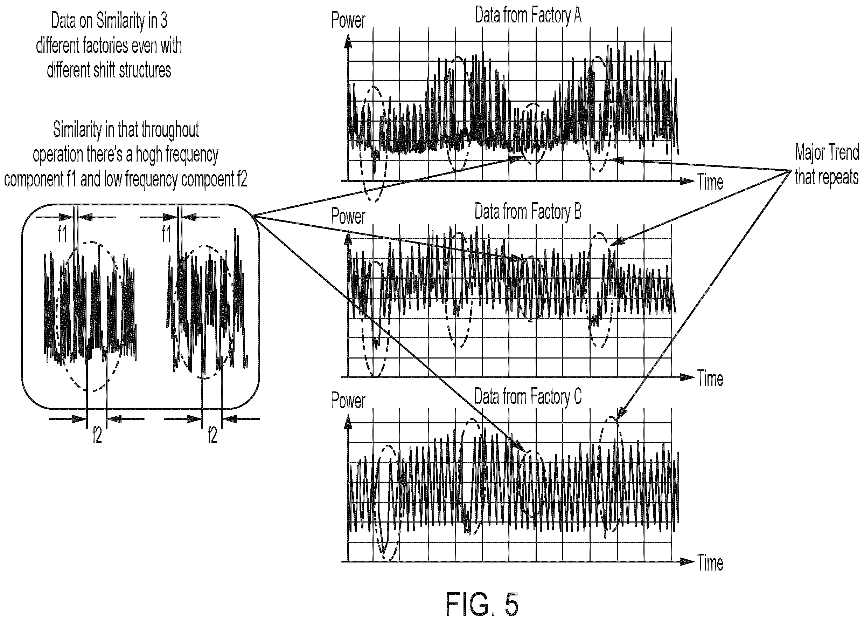

Fig. 5 illustrates power consumption data from three different plants, having different shift structures over a period of time. There are major trends that repeat such as the three 'gap' that appears at similar intervals at approximately the same timing. Also, there is an overall similarity that each plant across the period of time shows behavior of high frequency demand component and low frequency demand component.

While there are publications about optimization of fuel cell for an EV, a person skilled in the art would understand that optimization for a plant (factory) or a region that residential area of industrial area would be much more complicated as compared to an EV. As shown in Fig. 5, as well as other power consumption data for various regions, power consumption for such scale is much higher in term of capacity that is approximately 100~10000 times the power required by an EV. Typically for an EV, a fuel cell and a battery would be sufficient but for supply power to a plant or even a region, multiple fuel cells with different capacity and frequency characteristic would be required, as proposed in this invention. By using a combination of fuel cell that has various capacities, frequency characteristic, production of power using fuel cell become possible, but still there are various challenges to make use of fuel cell possible such as (1) the production has to be cost effective, (2) Start-time requirement (can operate immediately without losing efficiency), (3) The power demand may surge within a short time, (4) Power efficiency (due to cost issue) has to be more than 90%, and (5) life time of electrodes. Without a digital twin or an advanced optimization system such as the digital twin system as proposed in Fig. 1 and Fig. 2, meeting the demand alone can be challenging, let alone optimizing each fuel cell between 20% and 80% output capacity level to ensure cost and power conversion efficiency.

A feasibility study has been performed. The study results show that building a digital twin model to match power demand while optimizing on both cost and conversion efficiency is possible. However, as can be seen in Figs. 6, 7A, 7B, and 8 the selection of the fuel source combination to enable such optimization would demand the following:

(a) The optimum frequencies of the selected fuel cell types preferably vary significantly. For example optimum frequency of a first fuel cell selected would be approximately 2 to 20 times the optimum frequency of the second fuel cell selected in the combination.
(b) The startup times of the fuel cell types preferably vary significantly. For example start - up time of a first fuel cell used would be approximately 5 to 50 times the start-up time of the second fuel cell.
(c) The power capacities of the fuel cell types preferably vary significantly. For example, power capacity of a first fuel cell used would be approximately 10 to 20 times the power capacity of the second fuel cell.

One aspect that tends to be overlooked is the supply chain matter. For such power consumption demand, the fuel cell transportation and fuel cell production would requirement management system as proposed in Fig. 1 and Fig. 2, because the production and transportation would require lead time at least several weeks or months. The benefit of the orchestration system is that the supply chain information would give assurance that the supply would not be disrupted because the consumption of the fuel selected can be planned and simulated through the digital twin.

As different types of fuel cell would be needed for optimization, transportation and production is for multiple types and not a single type. As explained above, optimization considering the supply chain at the power generation through the power management system and orchestration controller could assist to optimize the entire chain, thanks to the characteristic of the orchestration system having more than 50% of the secondary layers of processors (system) spread remotely to control each process, and yet coordinate without requiring real time communication to achieve the optimization.

Specifically, and without limitation, as shown in Fig. 6, different kinds of fuel cells would have different characteristic in terms of efficiency, capability, startup time and optimal operating frequency. The optimal operating frequency described herein shall refer to the frequency characteristic of the additional power/energy source 236 about how fast can the power output change. For example, as shown in Fig. 6, SOFC (Solid Oxide Fuel Cell) may handle well up to a frequency of 2Hz while PEMFC (Proton-Exchange Membrane Fuel Cell).

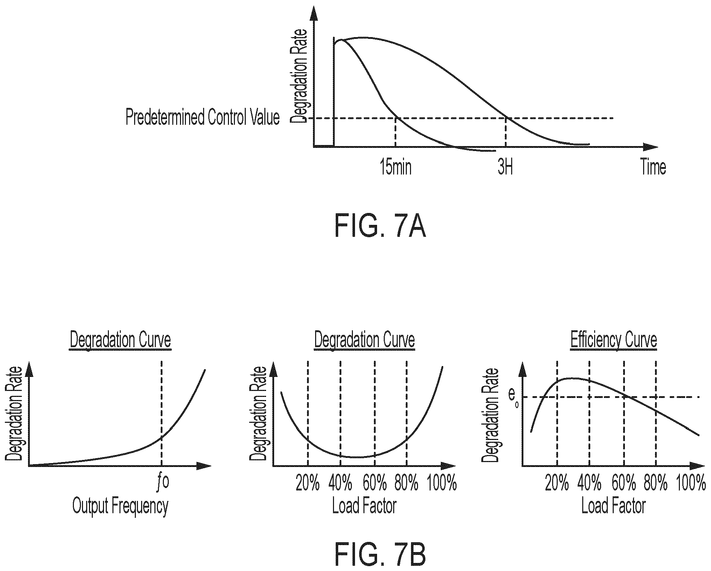

In the same manner, startup time is another parameter for optimization. As shown in Figs.6 and 7B, PEMFC may require a startup time of three hours but MGT (Micro Gas Turbine) would only need startup time of 15 minutes. By having a startup time where the degradation rate is lower than a predetermined control value, e.g., after three hours and 15 minutes respectively for PEMFC and MGT respectively, degradation rate of fuel cell can be kept low. Therefore, by avoiding use until the startup time, excessive damage to the fuel cell can be avoided, and longer life span of fuel cells can be achieved. In a large-scale orchestration system 100, similar to the orchestration system 100 as shown in Fig. 1, the first fuel cell 232 and the additional power/energy source 236 may comprise a plurality of similar or different types of fuel cell or energy sources. The first fuel cell 232 and the additional power/energy sources 236 may be powered up at different timing according to the power demand, which is accurately predicted through the simulation done in the digital twin 124a, 124b, 124c in the orchestration controller 120. For example, if the orchestration system 100 may be configured to predict well a power demand surge accurately so that the first fuel cell 232 and the additional power/energy sources 236 may be powered up in advance before the require start-up time so as not to stress the first fuel cell 232 nor the additional power/energy source 236. In this manner, longer life span and higher power efficiency can be achieved.

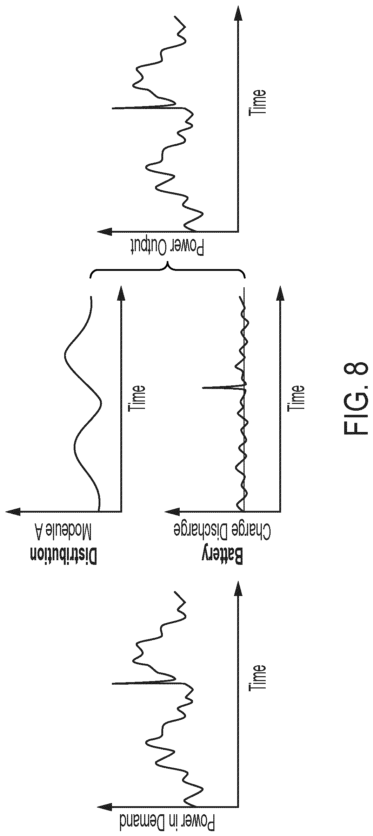

The degradation curves illustrated in Fig. 7B as well as Fig. 8 can be examined using other parameters such as output power frequency, load and load factor as shown by the above graph. This shows curves of one type of fuel cell, but similar observation can be said for other fuel cells, s shown in the graph, in general, a fuel cell will degrade faster after a certain frequency or operating below or above certain capacity (load factor).

Efficiency of fuel cell can also be examined in a similar way. For example, by using efficiency curves such as the ones illustrated in Fig. 8, degradation and efficiency curves can be determined. There are a number of fuel cell or battery management systems for automobile. Aspects of the present disclosure differ from such systems because the target is not just to power up an engine, but to various systems that demand much higher power (for example a factory, or a remote island), with a very complex demand characteristic (not just motor but various kinds of appliances), and may operate in very different environment that are not well controlled. The optimization in this invention includes also about green factor (Co2 emission rate). This is something not considered before, but in the future all power sources would have to pass through strict requirements to minimize emission of carbon dioxide.

Therefore, optimization of fuel cells is not as simple as what we see today, and can be multi-dimensional and become very complex. The goal of optimization is also more complex because there are many factors to consider simultaneously other than supply and demand. As parameters for the optimization are huge in numbers (can be up to more than one thousand), a high accuracy optimization system, usually implemented using a digital twin system to ensure real time computation would be required. Aspects of the present disclosure propose an orchestration system and propose also the power apparatus hardware for such implementation.

Optimization of fuel cells of various types would enable efficient use of fuel cell, be it to prolong the life span of fuel cells or to get high efficiency or a combination of both. In the above example where power in demand has a high frequent frequency component and a lower frequency component. The demand can be met by using a fuel cell, in combination with a different type of power/energy source, such as a battery wherein the battery supply the high frequency component at a smaller magnitude (example 10% of demand), the major portion of the demand is supply using a fuel cell which would be inefficient in handling high frequency. Providing the ability to optimize and to use a digital twin to compute demand and configure power supply fast, a power output that matches the demand will be made possible. The digital twin, in some aspects, may be adapted to compute near term future demand then calculate and distribute the supply loading to different energy/power sources, near term forecast and scheduling needs model simulation.

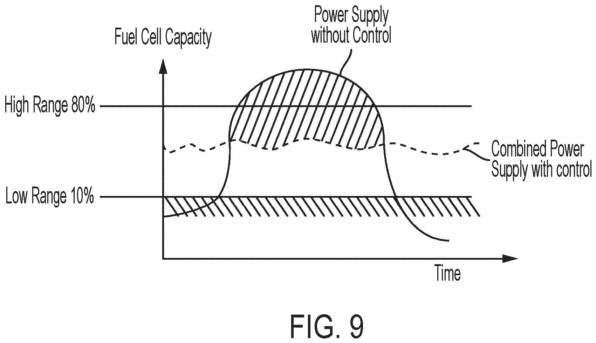

On the contrary, without control, operations of the fuel cell would be very much degraded. For example, in the graph of Fig. 9, if one type of fuel cells is used to supply power, at the start time where demand is at lower range, the fuel cell will be very much degraded. The same can be said when the demand drops lower than the lower range after peak. At peak power, the fuel cell will be operating at high degradation rate as well. As shown above by shaded area, a portion of time the fuel cell would be used at either high degradation rate zone and/or low efficiency zone. Therefore, by using the methodology as explained herein, (e.g., using the combined fuel cell and additional energy/power source) as power supply with control system, all fuel cells can be operated within optimize range. It should be noted that when the power demand is lower than the lower range, combined power supply can be used to charge a battery to avoid waste.

Referring back to Fig. 4, aspects of the present disclose contemplate the ability to obtain the energy conversion efficiency characteristic curve by sweeping one or more parameters during installation or maintenance. This information may be used to correct the digital model (e.g., digital twin). Then the maximum value of the energy conversion can be set to maximize an efficiency characteristic function as the center of operation.

It is another aspect of the present disclosure to achieve a self-adjusting function for fluctuations in operating conditions due to output fluctuations by implementing negative feedback control in accordance with the amount of deviation from the maximum value of the energy conversion efficiency characteristic function. In some embodiments, a digital model (e.g, digital twin) is used to calculate and compare the efficiency of the current operating conditions and the efficiency of the surrounding conditions of the energy conversion efficiency characteristic function. If the efficiency is higher than the current conditions, then those conditions may be adopted. This process may be repeated until no higher efficiency can be found, and then set that point as the operating condition for the device. In addition to higher efficiency, having such an accurate digital model through the orchestration system 100 may also be beneficial for fault prediction and for building a fault tolerant system. As described previously, an orchestration system 100 may comprise a plurality of first fuel cell 232 and a plurality of additional power/energy source 236 that may power up sequentially, the orchestration system 100 may also be configured to track each of the plurality of first fuel cell 232 and the plurality of additional power/energy source 236 for gathering data and perform machine learning on fault model.

In some embodiments, it may also be possible to set the operating condition boundary to find a certain conversion efficiency Eb (e.g. 80% of the maximum conversion efficiency) as the threshold value, and use it as a constraint for the operating condition.

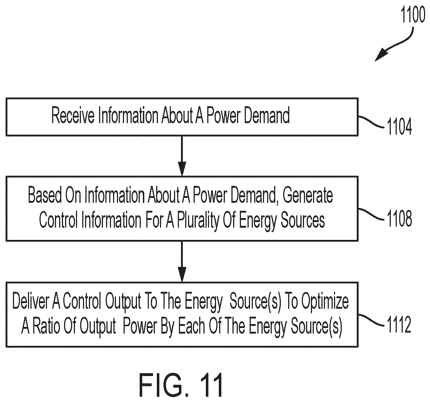

Referring now to Fig. 11, another process 1100 of operating a power management system and/or orchestration system will be described in accordance with at least some embodiments of the present disclosure. Steps of process 1100 may be combined with steps of any other process depicted and described herein, in any order. For instance, one or more steps of process 1100 may be combined with one or more steps of processes described herein without departing from the scope of the present disclosure.

The process 1100 may include receiving information about a power demand (step 1104). The information about the power demand may be received from one or more power consumers 116 (e.g., a plant, factory, etc.).

The process 1100 may further include generating control information for a plurality of energy/power sources based on the information received about the power demand (step 1108). The control information may include control signals for a fuel cell and one or more additional energy/power sources.

The process 1100 may further include delivering a control output to the energy source(s) to optimize a ratio of output power provided by each of the energy source(s) (step 1112). The control output may be delivered according to the control information generated in step 1108. This process may be repeated as necessary to provide intermittent and/or continuous optimization capabilities.

Additional aspects of the present disclosure contemplate a power supply apparatus, comprising (1) a first fuel cell; (2) an additional power/energy source; (3) an output terminal in electrical communication with both the first fuel cell and the additional power/energy source, wherein a power output by the output terminal comprises a first composition of a first power originating from the first fuel cell and a second composition of a second power originating from the additional power/energy source; (4) an output controller in communication with the output terminal, wherein the output controller adjusts one or both of the first composition and the second composition; and (5) a processing unit in communication with the output controller, wherein the processing unit optimizes the first composition and the second composition via the output controller according to an optimization function that at least one of maximizes conversion efficiency and maximizes lifetime of the first fuel cell.

Additional aspects of the present disclosure contemplate the first fuel cell is controlled by adjusting a plurality of control parameters, wherein the processing unit is configured to calculate a targeted control value for each of the plurality of control parameters so as to maximize at least one of conversion efficiency or lifetime of the first fuel cell.

Additional aspects of the present disclosure contemplate the additional power/energy source comprises a first additional fuel cell that is based on a different technology from the first fuel cell and a second additional fuel cell that is substantially similar to the first fuel cell.

Additional aspects of the present disclosure contemplate the additional power/energy source comprises at least one of a battery and an additional power/-energy source.

Additional aspects of the present disclosure contemplate the additional power/energy source comprises a first additional fuel cell and wherein the processing unit is configured to optimize the first composition and the second composition so as to maximize conversion efficiency of the first fuel cell and the first additional fuel cell in total.

Additional aspects of the present disclosure contemplate the additional power/energy source comprises a first additional fuel cell and wherein the processing unit is configured to optimize the first composition and the second composition so as to maximize lifetime of the first fuel cell and the first additional fuel cell in total.

Additional aspects of the present disclosure contemplate the first fuel cell has a first maximum frequency, and the additional power/energy source has a second maximum frequency, and wherein the processing unit is configured to optimize the first composition and the second composition based the first maximum frequency and the second maximum frequency.

Additional aspects of the present disclosure contemplate the second maximum frequency of the additional power/energy source is approximately 20 times and 500 times the first maximum frequency of the first fuel cell.

Additional aspects of the present disclosure contemplate the second maximum frequency of the additional power/energy source comprises a first component and a second component, wherein the first component is at least 20 times the second component.

Additional aspects of the present disclosure contemplate further comprising an input terminal for receiving a power demand frequency information, and wherein the processing unit is configured to adaptively compute a forecast of power demand in accordance with frequency and wherein the output controller is configured to adjust the first composition and the second composition by comparing the first maximum frequency and the second maximum frequency to the forecast of power demand.

Additional aspects of the present disclosure contemplate further comprising a digital twin comprising a processor to compute a forecast of power demand sorted by frequency component, real time values of the first maximum frequency and the second maximum frequency such that the processing unit is capable of adjusting the first composition and the second composition to match the power output to the forecast of power demand by way of frequency requirements based on the forecast.

Additional aspects of the present disclosure contemplate the digital twin comprises an input channel configured to receive a supply chain information and/or a demand historical frequency data, and wherein the digital twin is configured to produce a simulation result such that the processing unit is capable of adjusting the first composition and the second composition based on the forecast with reduced processing time.

Additional aspects of the present disclosure contemplate the first fuel cell has a first start-up time, and the additional power/energy source has a second start-up time, wherein the processing unit is configured to optimize the first composition and the second composition based on the first start-up time and the second start-up time so as to minimize degradation of the first fuel cell.

Additional aspects of the present disclosure contemplate the first start-up time of the first fuel cell is approximately between 10 times and 100 times the second start-up time of the additional power/energy source.

Additional aspects of the present disclosure contemplate the first start-up time of the first fuel cell is approximately more than 8 times the second start-up time of the additional power/energy source.

Additional aspects of the present disclosure contemplate further comprising an input terminal for receiving a power demand information, and wherein the processing unit is configured to adaptively compute a forecast of power demand and wherein the output controller is configured to adjust the first composition and the second composition so as to avoid supplying power during the first start-up time of the first fuel cell and the second start-up time of the additional power/energy source.

Additional aspects of the present disclosure contemplate further comprising a digital twin comprising a processor to compute a forecast of power demand to an accuracy of power required by minutes such that the processing unit is capable of adjusting the first composition and the second composition to avoid supplying power during the first start-up time of the first fuel cell and the second start-up time of the additional power/-energy source based on the forecast.

Additional aspects of the present disclosure contemplate the digital twin comprises an input channel configured to receive a supply chain information and/or a demand historical by minutes data, and wherein the digital twin is configured to produce a simulation result such that the processing unit is capable of adjusting the first composition and the second composition based on the forecast with reduced processing time.

Additional aspects of the present disclosure contemplate the first fuel cell has a first load capacity and the additional power/energy source has a second load capacity, wherein the processing unit is configured to optimize the first composition and the second composition based on the first load capacity and the second load capacity.

Additional aspects of the present disclosure contemplate the first load capacity is approximately between two and 20 times the second load capacity.

Additional aspects of the present disclosure contemplate the second load capacity comprises a first capacity component and a second capacity component, wherein the first capacity component is approximately less than a quarter of the first load capacity and the second capacity component is approximately more than two times the first load capacity.

Additional aspects of the present disclosure contemplate comprising an input terminal for receiving a power demand information, and wherein the processing unit is configured to adaptively compute a forecast of power demand and wherein the output controller is configured to adjust the first composition and the second composition so as to operate the first fuel cell at approximately between 20% and 80% of the first load capacity.

Additional aspects of the present disclosure contemplate further comprising a digital twin comprising processor to compute a forecast of power demand to an accuracy of kilowatts, wherein the digital twin is further configured to compute the forecast of power demand sorted by power demand information, real time values of the first load capacity and the second load capacity such that the processing unit is capable of adjusting the first composition and the second composition to match the power output to the forecast of power demand by way of load capacity requirements based on the forecast.

Additional aspects of the present disclosure contemplate the digital twin comprises an input channel configured to receive a supply chain information and/or a demand historical data to the accuracy of kilowatts, and wherein the digital twin is configured to produce a simulation result such that the processing unit is capable of adjusting the first composition and the second composition based on the forecast with reduced processing time.

Additional aspects of the present disclosure contemplate the first fuel cell has a first predetermined efficiency range and the additional power/energy source has a second predetermined efficiency range, wherein the processing unit is configured to optimize the first composition and the second composition such that the first fuel cell and the additional power/energy source operate within the first predetermined efficiency range and the second predetermined efficiency range respectively.

Additional aspects of the present disclosure contemplate further comprising an input channel configured to receive information related to a fuel cell supply chain, wherein the processing unit is configured to optimize the first composition and the second composition based on the information related to the fuel cell supply chain.

Additional aspects of the present disclosure contemplate further comprising an input channel for receiving a power demand information and wherein the processing unit preforms a frequency of utilization analysis on the power demand information so as to adjust the first composition and the second composition.

Additional aspects of the present disclosure contemplate (a) the additional power/energy source comprises a second fuel cell and a battery; (b) the processing unit compute an efficiency evaluation value based on conversion efficiency of the first fuel cell and the second fuel cell; and (c) the processing unit is configured to adjust the first composition and the second composition such that the efficiency evaluation value is within a predetermined range.

Additional aspects of the present disclosure contemplate (a) the additional power/energy source comprises a second fuel cell and a battery; (b) the processing unit compute an lifespan evaluation value based on lifespan data of the first fuel cell and the second fuel cell; and (c) the processing unit is configured to adjust the first composition and the second composition such that the lifespan evaluation value is within a predetermined range.

Additional aspects of the present disclosure contemplate (a) the additional power/energy source comprises a second fuel cell and a battery; (b) the processing unit compute an evaluation function based on a combination weighted evaluation of a lifespan, fuel efficiency, capex investment, degradation of fuel cell related to the first fuel cell and (c) the second fuel cell; and (d) the processing unit is configured to adjust the first composition and the second composition such that the evaluation function is within a predetermined range.

Additional aspects of the present disclosure contemplate the processing unit is configured to compute a depletion condition, and wherein the output controller is adapted to re-channel power from a targeted power network to the output terminal as an additional power/energy source supply in addition to the first composition and the second composition when the depletion condition exceeds a predetermined value.

In the foregoing description, for the purposes of illustration, methods were described in a particular order. It should be appreciated that in alternate embodiments, the methods may be performed in a different order than that described without departing from the scope of the embodiments. It should also be appreciated that the methods described above may be performed as algorithms executed by hardware components (e.g., circuitry) purpose-built to carry out one or more algorithms or portions thereof described herein. In another embodiment, the hardware component may comprise a general-purpose microprocessor (e.g., CPU, GPU) that is first converted to a special-purpose microprocessor. The special-purpose microprocessor then having had loaded therein encoded signals causing the, now special-purpose, microprocessor to maintain machine-readable instructions to enable the microprocessor to read and execute the machine-readable set of instructions derived from the algorithms and/or other instructions described herein. The machine-readable instructions utilized to execute the algorithm(s), or portions thereof, are not unlimited but utilize a finite set of instructions known to the microprocessor. The machine-readable instructions may be encoded in the microprocessor as signals or values in signal-producing components by, in one or more embodiments, voltages in memory circuits, configuration of switching circuits, and/or by selective use of particular logic gate circuits. Additionally or alternatively, the machine-readable instructions may be accessible to the microprocessor and encoded in a media or device as magnetic fields, voltage values, charge values, reflective/non-reflective portions, and/or physical indicia.

The present invention, in various embodiments, configurations, and aspects, includes components, methods, processes, systems and/or apparatus substantially as depicted and described herein, including various embodiments, subcombinations, and subsets thereof. Those of skill in the art will understand how to make and use the present invention after understanding the present disclosure. The present invention, in various embodiments, configurations, and aspects, includes providing devices and processes in the absence of items not depicted and/or described herein or in various embodiments, configurations, or aspects hereof, including in the absence of such items as may have been used in previous devices or processes, e.g., for improving performance, achieving ease, and\or reducing cost of implementation.

The foregoing discussion of the invention has been presented for purposes of illustration and description. The foregoing is not intended to limit the invention to the form or forms disclosed herein. In the foregoing Detailed Description for example, various features of the invention are grouped together in one or more embodiments, configurations, or aspects for the purpose of streamlining the disclosure. The features of the embodiments, configurations, or aspects of the invention may be combined in alternate embodiments, configurations, or aspects other than those discussed above. This method of disclosure is not to be interpreted as reflecting an intention that the claimed invention requires more features than are expressly recited in each claim. Rather, as the following claims reflect, inventive aspects lie in less than all features of a single foregoing disclosed embodiment, configuration, or aspect. Thus, the following claims are hereby incorporated into this Detailed Description, with each claim standing on its own as a separate preferred embodiment of the invention.

Moreover, though the description of the invention has included description of one or more embodiments, configurations, or aspects and certain variations and modifications, other variations, combinations, and modifications are within the scope of the invention, e.g., as may be within the skill and knowledge of those in the art, after understanding the present disclosure. It is intended to obtain rights, which include alternative embodiments, configurations, or aspects to the extent permitted, including alternate, interchangeable and/or equivalent structures, functions, ranges, or steps to those claimed, whether or not such alternate, interchangeable and/or equivalent structures, functions, ranges, or steps are disclosed herein, and without intending to publicly dedicate any patentable subject matter.

## Claims

1. A power supply system, comprising:

   a processor (104a-c); and
   memory coupled with the processor (104a-c), wherein the memory comprises data stored thereon that is executable by the processor (104a-c), wherein the data includes first data that enables the processor (104a-c) to:

   receive information about a power demand for an output power of a first fuel cell (232) and an output power of an additional energy source;
   generate control information that optimizes a ratio of the output power of the first fuel cell (232) and the output power of the additional energy source to meet the power demand; and
   deliver a control output to the first fuel cell (232) and the additional energy source according to the control information that optimizes the ratio of the output power of the first fuel cell (232) and the output power of the additional energy source.

2. The power supply system of claim 1, wherein the additional energy source comprises at least one of a storage battery, a second fuel cell, and a power generator.

3. The power supply system of claim 2, wherein the first fuel cell (232) comprises a first startup period, wherein the second fuel cell comprises a second startup period, and wherein the first startup period is different from the first startup period.

4. The power supply system of any of claims 1 to 3, wherein the data further enables the processor (104a-c) to optimize the ratio of the output power of the first fuel cell (232) and the output power of the additional energy source between a range of 20% and 80% of a load capacity of the first fuel cell (232).

5. The power supply system of any of claims 1 to 4, wherein the data further enables the processor (104a-c) to optimize the ratio of the output power of the first fuel cell (232) and the output power of the additional energy source so that the output power of the first fuel cell (232) is within a range below a predetermined maximum operating frequency with respect to degradation, based on a frequency variation of a power demand time series.

6. The power supply system of any of claims 1 to 5, wherein the data further enables the processor (104a-c) to predict the power demand based on the information received about the power demand.

7. The power supply system of claim 6, wherein the data further enables the processor (104a-c) to generate a plurality of supply-plans that plan the ratio of the output power of the first fuel cell (232) and the output power of the additional energy source over a predetermined period of time based on the predicted power demand.

8. The power supply system of claim 7, wherein the data further enables the processor (104a-c) to:

   select an optimal supply plan from among the plurality of supply-plans, wherein the optimal supply plan is selected to optimize at least one of efficiency, equipment cost, and degradation of the output power of the first fuel cell (232) and/or the additional energy source; and
   adjust the control information based on the selection of the optimal supply plan.

9. The power supply system of claim 8, wherein the optimal supply plan is selected based on results of simulating a control and state changes of the first fuel cell (232) and the additional energy source according to each of the plurality of supply-plans.

10. The power supply system of any of claims 1 to 9, wherein the information about the power demand is received from at least one of a truck management system, a ship management system, a pipeline management system (152), a fuel tank management system (136), and a carbon credit system (160).

11. The power supply system of any of claims 1 to 10, wherein the data further enables the processor (104a-c) to optimize the ratio of the output power of the first fuel cell (232) and the output power of the additional energy source so that an output of the first fuel cell (232) is stopped during a startup period determined in advance for the first fuel cell (232).

12. The power supply system of any of claims 1 to 11, wherein the data further enables the processor (104a-c) to optimize the ratio of the output power of the first fuel cell (232) and the output power of the additional energy source using an evaluation function based on a weighted evaluation of efficiency, equipment cost, and degradation of output power of the first fuel cell (232) and/or the additional energy source.

13. The power supply system of any of claims 1 to 12, wherein the data further enables the processor (104a-c) to perform a frequency analysis on variations in a power demand time series and then, based on the frequency analysis, update the control information for optimizing the ratio of the output power of the first fuel cell (232) and the output power of the additional energy source.

14. The power supply system of any of claims 1 to 13, wherein at least one of:

   the first fuel cell (232) and the additional energy source;
   or the processor (104a-c) and the memory are installed in a common power plant.

15. A method, comprising:

   receiving information about a power demand for an output power of a first fuel cell (232) and an output power of an additional energy source;
   generating control information that optimizes a ratio of the output power of the first fuel cell (232) and the output power of the additional energy source to meet the power demand; and
   delivering a control output to the first fuel cell (232) and the additional energy source according to the control information that optimizes the ratio of the output power of the first fuel cell (232) and the output power of the additional energy source.

FIG. 1

FIG. 2

EP 4 579 977 A1

FIG. 3

$$dE = -g\,(p, q, r, s, t, ....)$$

$$E_{op} = Eo + \int_{0}^{t} dEdt$$

FIG. 4

FIG. 5

| Type | | Eff | Cap | StartUp Time | Frequency |
|---|---|---|---|---|---|
| SOFC | | 75% | 200 | 24h | ~2Hz |
| PEMFC | | 45% | 100 | 3h | ~5Hz |
| MGT | | 40% | 10 | 15min | ~50Hz |
| Battery | | 85% | 50 | 0min | ~1KHz |

FIG. 6

EP 4 579 977 A1

FIG. 7A

FIG. 7B

FIG. 8

FIG. 9

| Rank | Energy Conversion Technology | Energy Conversion Efficiency | Output range with minimal Optimization | Time from start of operation to stable output | Frequency of output fluctuations with minimal degradation | Equipment size per energy density | Equipment cost per energy density |
|---|---|---|---|---|---|---|---|
| 1 | Fuel Cell | 40 ~ 75% | 20% ~ 80% | 1h ~ 24h | Once every 15 min or less | Large | Medium |
| 2 | Micro Gas Turbine | 35 ~ 42% | 20% ~ 80% | 15 - 30 min | Once every minute or less | Medium | Small |
| 3 | Battery | 90% | 20% ~ 80% | Immediate | – | Big | Big |

FIG. 10

1100

Receive Information About A Power Demand ⎯ 1104

Based On Information About A Power Demand, Generate Control Information For A Plurality Of Energy Sources ⎯ 1108

Deliver A Control Output To The Energy Source(s) To Optimize A Ratio Of Output Power By Each Of The Energy Source(s) ⎯ 1112

FIG. 11

**EP 4 579 977 A1**

**EUROPEAN SEARCH REPORT**

Application Number

EP 24 22 2948

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/059855 A1 (MORI TAKANORI [JP] ET AL) 24 February 2022 (2022-02-24) | 1-4,6, 10,11, 14,15 | INV. H02J3/14 H02J3/48 |
| Y | * abstract; figures * * paragraphs [0007] - [0019], [0030] - [0044], [0063] - [0095] * | 5,7 | H02J3/38 |
| Y | JP 2023 182545 A (VOLVO TRUCK CORP) 26 December 2023 (2023-12-26) | 5,7 | ADD. H02J7/34 |
| A | * abstract; figures * * paragraphs [0008] - [0031] * | 3 | |

TECHNICAL FIELDS
SEARCHED (IPC)

H02J

The present search report has been drawn up for all claims

| Place of search | Date of completion of the search | Examiner |
|---|---|---|
| Munich | 16 May 2025 | Hartmann, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

30

**ANNEX TO THE EUROPEAN SEARCH REPORT
ON EUROPEAN PATENT APPLICATION NO.**

EP 24 22 2948

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2025

| Patent document cited in search report | Publication date | Patent family member(s) | | Publication date |
|---|---|---|---|---|
| US 2022059855 A1 | 24-02-2022 | CN | 114079067 A | 22-02-2022 |
| | | EP | 3957515 A2 | 23-02-2022 |
| | | JP | 2022034394 A | 03-03-2022 |
| | | US | 2022059855 A1 | 24-02-2022 |
| | | US | 2024039022 A1 | 01-02-2024 |
| JP 2023182545 A | 26-12-2023 | CN | 117227589 A | 15-12-2023 |
| | | EP | 4292865 A1 | 20-12-2023 |
| | | JP | 2023182545 A | 26-12-2023 |
| | | KR | 20230171896 A | 21-12-2023 |
| | | US | 2023398906 A1 | 14-12-2023 |

EPO FORM P0459

For more details about this annex : see Official Journal of the European Patent Office, No. 12/82

## EP 4 579 977 A1

**Patent documents cited in the description**

- JP 2024224262 A
- JP 2024224279 A
- US 63614930